# EUROPÄISCHE PATENTSCHRIFT

(11) **EP 3 927 991 B1**
(45) Veröffentlichungstag und Bekanntmachung des Hinweises auf die Patenterteilung: **03.04.2024**
(21) Anmeldenummer: 20704387.8
(22) Anmeldetag: 28.01.2020
(51) Int. Cl.: F16D 25/0638, F16D 13/70

(54) **KOMPAKTE KUPPLUNGSANORDNUNG MIT EINEM STÜTZKÖRPER**
COMPACT CLUTCH ASSEMBLY WITH A SUPPORT BODY
SYSTÈME D'EMBRAYAGE COMPACT DOTÉ D'UN CORPS D'APPUI

(30) Priorität: 19.02.2019 DE 102019104076
(43) Veröffentlichungstag der Anmeldung: 29.12.2021
(73) Patentinhaber: Schaeffler Technologies AG & Co. KG, 91074 Herzogenaurach (DE)
(72) Erfinder: CARL, Pascal, 77815 Bühl (DE); NEUKUM, Reiner, 77746 Schutterwald (DE); BRAUN, Lucas, 77704 Oberkirch (DE)
(86) Internationale Anmeldenummer: PCT/DE2020/100051
(87) Internationale Veröffentlichungsnummer: WO 2020/169143

(56) Entgegenhaltungen:
- EP-B1- 3 927 990
- DE-A1-102013 216 747
- FR-A1- 3 081 951
- JP-A- 2016 001 033
- JP-Y2- 2 507 465
- US-A1- 2006 266 612

## Beschreibung

Die Erfindung betrifft eine Kupplungsanordnung für einen Antriebsstrang eines Kraftfahrzeuges, wie eines Pkws, Lkws, Busses oder sonstigen Nutzfahrzeuges, mit drei Kupplungen nach dem Oberbegriff des Patentanspruchs 1.

Die Kupplungsanordnung eignet sich insbesondere für eine Hybridantriebseinheit. Eine Hybridantriebseinheit ist zwischen einem Verbrennungsmotor, einem Elektromotor und einem Getriebe angeordnet. Die Hybridantriebseinheit umfasst ein Hybridmodul mit einer Kupplungsanordnung, an die der Elektromotor sowie der Verbrennungsmotor angebunden sind. Die Kupplungsanordnung umfasst eine Dreifachkupplung, bestehend aus einer Doppelkupplung mit zwei Kupplungen sowie aus einer Trennkupplung zur Ankopplung eines Antriebselements, beispielsweise des Verbrennungsmotors.

Derartige Kupplungsanordnungen umfassen aufgrund ihrer Vielzahl von Komponenten üblicherweise einen entsprechenden Bauraum.

Als weiterer Stand der Technik wird auf die US 2006/266612 A1 verwiesen, aus der eine Kupplungsanordnung bekannt ist, die auf den Oberbegriff des Anspruchs 1 lesbar ist.

Die Aufgabe der vorliegenden Erfindung besteht darin, eine möglichst kompakte Kupplungsanordnung zu schaffen.

Die Lösung der Aufgabe erfolgt erfindungsgemäß durch eine Kupplungsanordnung mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Die Erfindung betrifft somit eine Kupplungsanordnung für einen Antriebsstrang eines Kraftfahrzeuges, wobei die Kupplungsanordnung aufweist:
ein Gehäuse, das vorzugsweise einen Nassraum begrenzt,
einen zu dem Gehäuse relativ drehbar um eine Drehachse gelagerten Trägerkörper, wobei sich die Drehachse von einer Motorseite zu einer Getriebeseite der Kupplungsanordnung erstreckt,
vorzugsweise eine zu dem Gehäuse relativ drehbar um die Drehachse gelagerte Eingangswelle,
eine erste Kupplung, die über den Trägerkörper ein drehfest mit der Eingangswelle verbundenes erstes Erstkupplungsbestandteil und ein mit dem ersten Erstkupplungsbestandteil drehverbindbares zweites Erstkupplungsbestandteil aufweist,
eine zweite Kupplung, die zwei miteinander drehverbindbare
Zweitkupplungsbestandteile aufweist und mit einem ersten Zweitkupplungsbestandteil drehfest an beziehungsweise zu dem zweiten Erstkupplungsbestandteil der ersten Kupplung angeordnet ist, und die mit einem zweiten Zweitkupplungsbestandteil mit einer ersten Abtriebswelle verbindbar ist, und
wobei an der ersten Kupplung und an der zweiten Kupplung ein gemeinsamer Stützkörper angeordnet ist, der die erste Kupplung und die zweite Kupplung gegen axiale Belastungen entlang der Drehachse widerlagert, wobei die axialen Belastungen der ersten Kupplung von einem getriebeseitigen ersten Drucktopf zur Kupplungswirkverbindung wirken und die axialen Belastungen der zweiten Kupplung von einem getriebeseitigen zweiten Drucktopf zur Kupplungswirkverbindung wirken.

Die Formulierung Nassraum bedeutet hierbei, dass es sich um eine nasslaufende, also ölgeschmierte Kupplung handelt.

Die Formulierung an beziehungsweise zu zeigt, dass beide Formulierungen gleichbedeutend zu verstehen sind. Zwar kann optional eine Einteiligkeit der Komponenten vorgesehen sein, doch ist dies nicht unmittelbar Bestandteil der gewählten Formulierung.

Besonders bevorzugt ist der Stützkörper ein Stützblech.

Zur Betätigung der als Reibungskupplung ausgebildeten Kupplungsanordnung, insbesondere zum Schließen der Reibungskupplung, kann ein hydraulisches Fluid, insbesondere Öl, in eine Druckkammer gepumpt werden, wodurch sich der Druck in der Druckkammer erhöht. Der ansteigende Druck in der Druckkammer kann die Federkraft des außerhalb der Druckkammer an dem Drucktopf angreifenden Federelements überwinden und den Drucktopf axial verlagern. Der Drucktopf kann dadurch gegen eine Anpressplatte drücken und einen Reibbelag zwischen der von dem Drucktopf axial verlagerten Anpressplatte und einer in axialer Richtung feststehenden Gegenplatte reibschlüssig verpressen, um die Reibungskupplung zu schließen und einen Drehmomentfluss über die Reibungskupplung herzustellen. Die Reibungskupplung kann insbesondere als Lamellenkupplung ausgestaltet sein, bei der mit einem Außenlamellenträger drehfest verbundene aber axial verlagerbare, insbesondere als Reibbeläge oder Stahlplatten ausgestaltete, Außenlamellen und mit einem Innenlamellenträger drehfest verbundene aber axial verlagerbare, insbesondere als Stahlplatten oder Reibbeläge ausgestaltete, Innenlamellen alternierend hintereinander vorgesehen sind, die zwischen der Gegenplatte und der Anpressplatte reibschlüssig verpresst werden können, um einen Drehmomentfluss zwischen dem Außenlamellenträger und dem Innenlamellenträger herbeizuführen. Im Zugbetrieb kann das in einer Brennkraftmaschine und/oder einer elektrischen Maschine erzeugte Drehmoment über den Außenlamellenträger eingeleitet und über den Innenlamellenträger, insbesondere an eine Getriebeeingangswelle eines Kraftfahrzeuggetriebes, ausgeleitet werden oder umgekehrt. Wenn der Druck in der Druckkammer reduziert wird, kann die Federkraft des Federelements den Drucktopf zurück in seine, insbesondere der geöffneten Stellung der Reibungskupplung entsprechenden, axialen Ausgangsstellung zurück verlagert werden, wobei das in der Druckkammer zuvor hineingepumpte hydraulische Fluid zu einem Ausgang verdrängt werden kann. Die Kupplungsbetätigung kann alternativ auch über Kolbenausrücksysteme erfolgen.

Gemäß einer erfindungsgemäßen Ausführungsform der Erfindung ist vorgesehen, dass die Kupplungsanordnung weiterhin aufweist eine dritte Kupplung, die zwei miteinander drehverbindbare Drittkupplungsbestandteile aufweist und mit einem ersten Drittkupplungsbestandteil drehfest an dem zweiten Erstkupplungsbestandteil der ersten Kupplung angeordnet ist, und die mit einem zweiten Drittkupplungsbestandteil mit einer zweiten Abtriebswelle verbindbar ist. Eine derart ausgebildete Kupplung heißt auch Dreifachkupplung, wobei diese insbesondere eine Trennkupplung, beispielsweise die erste Kupplung, und eine Doppelkupplung, aufweisend die zweite und dritte Kupplung, sein kann. So ist die Erfindung insbesondere vorteilhaft auf eine derart ausgebildete Dreifachkupplung mit einer kompakten Bauform anwendbar.

Gemäß einer bevorzugten Ausführungsform der Erfindung ist vorgesehen, dass der erste Zweitkupplungsbestandteil der zweiten Kupplung und der zweite Erstkupplungsbestandteil der ersten Kupplung als ein gemeinsamer Lamellenträger ausgebildet sind. Dies erlaubt eine zusätzlich kompakte Bauweise, weil der Materialeinsatz für zwei verschiedene Komponenten entfällt.

Gemäß einer bevorzugten Ausführungsform der Erfindung ist vorgesehen, dass der Lamellenträger eine Außenverzahnung aufweist zur Aufnahme von innenverzahnten Lamellen, insbesondere innenverzahnten Stahllamellen, der ersten Kupplung und dass der Lamellenträger eine Innenverzahnung aufweist zur Aufnahme von außenverzahnten Lamellen, insbesondere außenverzahnten Stahllamellen, der zweiten Kupplung. Ein derart ausgeführter Lamellenträger ermöglicht eine kompakte Bauweise wegen der radial doppelseitigen Nutzung der Lamellenträgerflächen.

Gemäß einer bevorzugten Ausführungsform der Erfindung ist vorgesehen, dass der Stützkörper derart S-förmig ausgebildet ist, dass sein äußerer zur ersten Kupplung weisender Kragen die erste Kupplung axial widerlagert und dass der zur zweiten Kupplung weisende S-Schlag des Stützkörpers die zweite Kupplung axial widerlagert. Ein derart ausgebildeter Stützkörper ermöglicht eine zuverlässige Abstützung der beiden Kupplungen.

Die Form des Stützkörpers kann durchaus variieren und ist insbesondere von der Lage von Lamellenpakete zueinander und von der Peripherie der ersten und der zweiten Kupplung abhängig.

Gemäß einer bevorzugten Ausführungsform der Erfindung ist vorgesehen, dass die Kupplungsanordnung einen Sicherungsring aufweist, der entlang der Drehachse koaxial auf der Motorseite des Stützkörpers angeordnet ist und den Stützkörper axial widerlagert, wobei der Sicherungsring insbesondere von einem Lamellenträger entlang der Drehachse, vorzugsweise durch Haltemittel, axial widergelagert ist. Vorteilhafter Weise werden auch über den Sicherungsring sowohl die Betätigungskräfte der ersten als auch der zweiten Kupplung abgestützt.

Gemäß einer bevorzugten Ausführungsform der Erfindung ist vorgesehen, dass ein Lamellenträger am zur Motorseite weisenden, offenen Ende Fingerelemente an einem Fingerkranz aufweist, wobei die Fingerelemente durch wechselwirkend ausgebildete Ausnehmungen am Stützkörper hindurchgreifen, wobei die Fingerelemente insbesondere radial ersteckende Haltemittel zur axialen Widerlagerung eines Sicherungsrings am Stützkörper aufweisen. Dies ermöglicht eine kompakte Einheit, um die Komponenten zuverlässig miteinander zu verbinden, wobei die Anzahl der Komponenten gering gehalten werden kann, sodass hieraus eine Kostenreduktion resultiert.

Bevorzugt können die Fingerelemente und die Ausnehmungen umfangsgemäß für eine komponentenschonende Kraftverteilung gleichmäßig verteilt sein.

Gemäß einer bevorzugten Ausführungsform der Erfindung ist vorgesehen, dass der Fingerkranz umfangsgemäß zwischen den Fingerelementen Abstützmittel derart aufweist, dass der Stützkörper und der Lamellenträger axial entlang der Drehachse gegeneinander widerlagernd angeordnet sind. Die Abstützmittel des Fingerkranzes und der Stützkörper sind korrelierend ausgebildet, um eine gleichmäßige Kraftverteilung zum komponentenschonenden Kupplungseinsatz zu ermöglichen.

Weiterhin offenbart ist ein Stützkörper für eine Kupplungsanordnung nach mindestens einem der vorhergehenden Merkmale mit Merkmalen des Stützkörpers nach mindestens einem der vorhergehenden Merkmale.

Ebenso offenbart ist ein Lamellenträger für eine Kupplungsanordnung nach mindestens einem der vorhergehenden Merkmale mit Merkmalen des Lamellenträgers nach mindestens einem der vorhergehenden Merkmale.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine Schnittansicht einer ersten Ausführungsform einer bevorzugten Kupplungsanordnung,
Fig. 2: ein Ausschnitt der Schnittansicht der Kupplungsanordnung nach Fig. 1,
Fig. 3: ein perspektivischer Ausschnitt der Schnittansicht der Kupplungsanordnung nach den Fig. 1 und 2,
Fig. 4: eine perspektivische Ansicht eines Lamellenträgers für die Kupplungsanordnung nach Fig. 1,
Fig. 5: ein Ausschnitt einer Seitenansicht des Lamellenträgers nach Fig. 4,
Fig. 6: eine perspektivische Ansicht eines Stützkörpers für die Kupplungsanordnung nach Fig. 1,
Fig. 7: ein Ausschnitt einer Frontansicht des Stützkörpers nach Fig. 6 und
Fig. 8: ein Ausschnitt einer perspektivischen Ansicht des Stützkörpers nach Fig. 6.

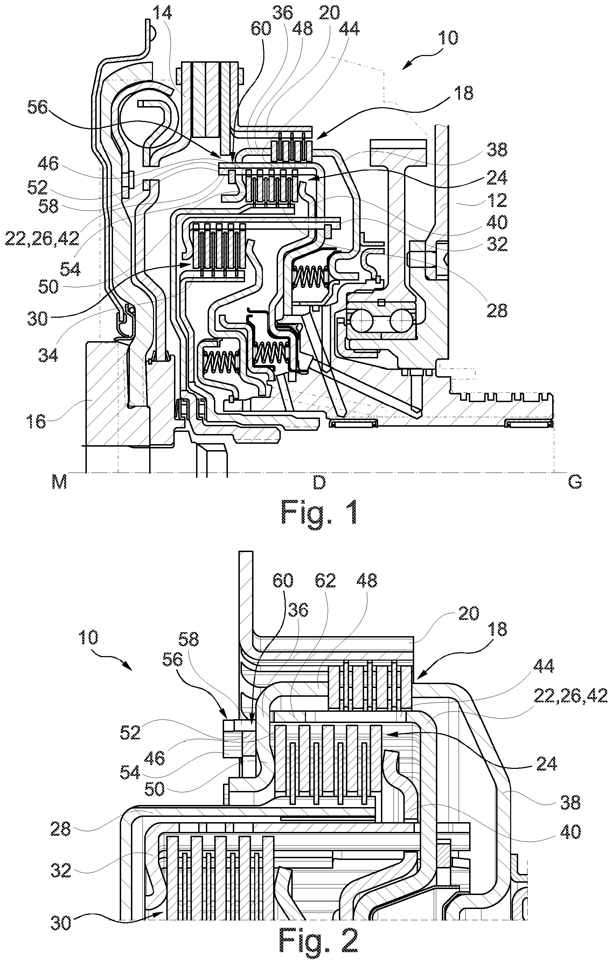

Figur 1 zeigt eine erste Ausführungsform einer Kupplungsanordnung 10 für einen Antriebsstrang eines Kraftfahrzeuges. Dabei weist die Kupplungsanordnung 10 auf: ein Gehäuse 12, das vorzugsweise einen Nassraum begrenzt,
einen zu dem Gehäuse 12 relativ drehbar um eine Drehachse D gelagerten Trägerkörper 14, wobei sich die Drehachse D von einer Motorseite M zu einer Getriebeseite G der Kupplungsanordnung 10 erstreckt,
vorzugsweise eine zu dem Gehäuse 2 relativ drehbar um die Drehachse D gelagerte Eingangswelle 16,
eine erste Kupplung 18, die über den Trägerkörper 14 einen drehfest mit der Eingangswelle 16 verbundenes erstes Erstkupplungsbestandteil 20 und einen mit dem ersten Erstkupplungsbestandteil 20 drehverbindbaren zweiten Erstkupplungsbestandteil 22 aufweist,
eine zweite Kupplung 24, die zwei miteinander drehverbindbare Zweitkupplungsbestandteile 26, 28 aufweist und mit einem ersten Zweitkupplungsbestandteil 26 drehfest an beziehungsweise zu dem zweiten Erstkupplungsbestandteil 22 der ersten Kupplung 18 angeordnet ist, und die mit einem zweiten Zweitkupplungsbestandteil 28 mit einer ersten Abtriebswelle verbindbar ist, und
eine dritte Kupplung 30, die zwei miteinander drehverbindbare Drittkupplungsbestandteile 32, 34 aufweist und mit einem ersten Drittkupplungsbestandteil 32 drehfest an beziehungsweise zu dem zweiten Erstkupplungsbestandteil 22 der ersten Kupplung 18 angeordnet ist, und die mit einem zweiten Drittkupplungsbestandteil 34 mit einer zweiten Abtriebswelle verbindbar ist.

Dabei ist an der ersten Kupplung 18 und an der zweiten Kupplung 24 ein gemeinsamer Stützkörper 36 angeordnet, der die erste Kupplung 18 und die zweite Kupplung 24 gegen axiale Belastungen entlang der Drehachse D widerlagert, wobei die axialen Belastungen der ersten Kupplung 18 von einem getriebeseitigen ersten Drucktopf 38 zur Kupplungswirkverbindung wirken und die axialen Belastungen der zweiten Kupplung 24 von einem getriebeseitigen zweiten Drucktopf 40 zur Kupplungswirkverbindung wirken.

Die Eingangswelle 16 ist insbesondere eine Kurbelwelle eines Verbrennungsmotors.

Eine derart ausgebildete Kupplung heißt auch Dreifachkupplung.

Die Formulierung Nassraum bedeutet hierbei, dass es sich um eine nasslaufende, also ölgeschmierte Kupplungsanordnung 10 handelt.

Insbesondere in den Fig. 1 bis 3 ist exemplarisch dargestellt, dass die erste Kupplung 18 innenverzahnt ausgebildete Stahllamellen aufweist, die mit einem entsprechend außenverzahnt ausgebildeten Lamellenträger 42 verbunden sind. Die zweite Kupplung 24 weist ebenfalls beispielhaft außenverzahnte Stahllamellen auf, die mit dem entsprechend innenverzahn ausgebildeten Lamellenträger 42 verbunden sind. Beide Kupplungen 18, 24 werden an der Getriebeseite G über die Drucktöpfe 38, 40 betätigt. Dementsprechend sind die Betätigungskräfte an der Motorseite M vom Stützkörper 36 abzustützen. Dazu wird der Stützkörper 36 auf den Lamellenträger 42 mittels einer Steckverbindung angebracht und über einen Sicherungsring 52 axial gesichert.

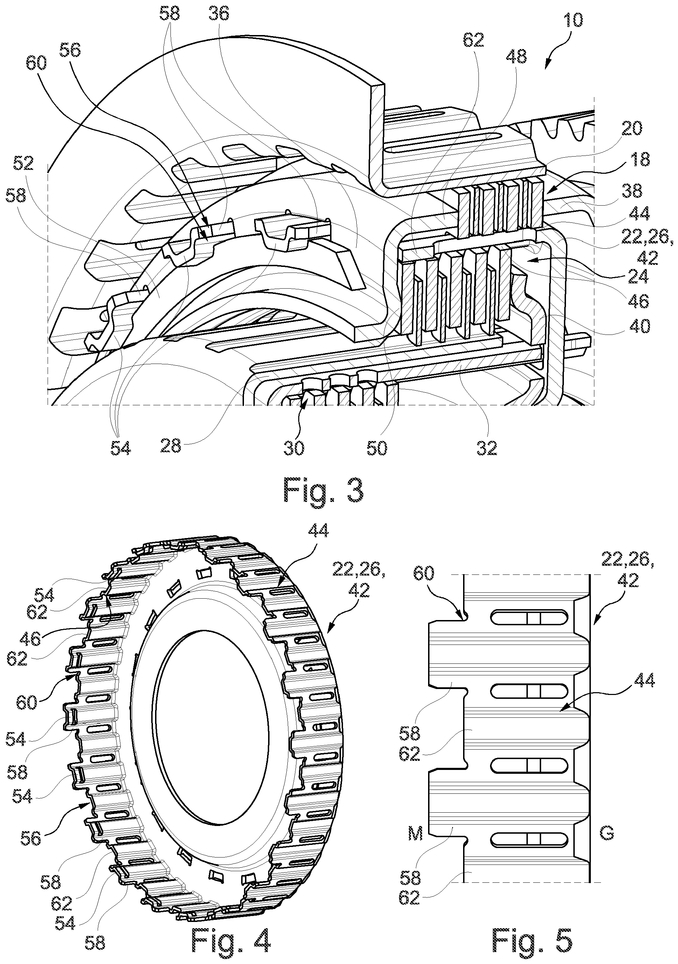

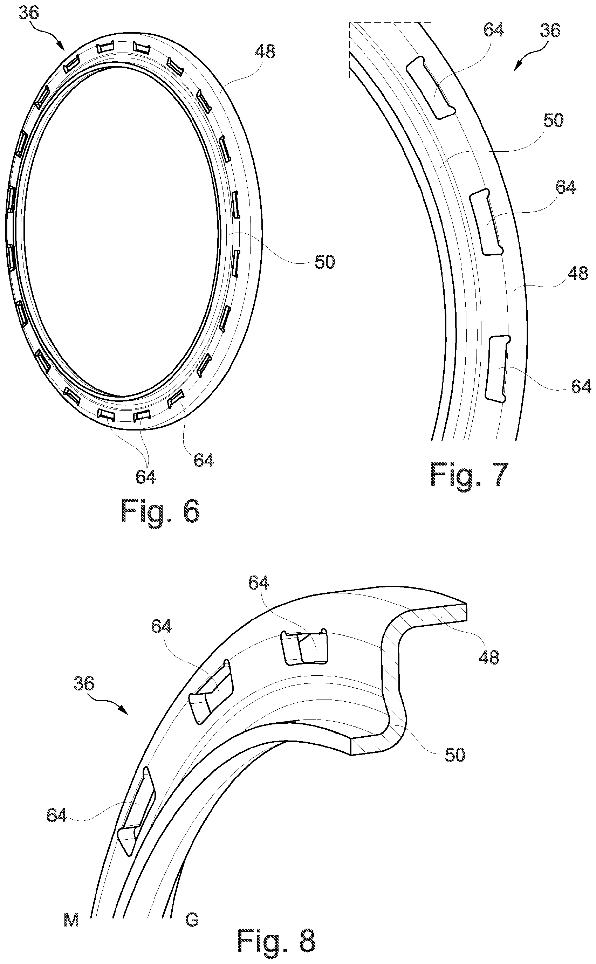

Gut erkennbar in Fig. 3 ist, dass der Lamellenträger 42, näher dargestellt in den Fig. 4 und 5, am offenen Ende 56 Fingerelemente 58 aufweist, die durch entsprechende Ausnehmungen 64 am Stützkörper 36, näher dargestellt in den Fig. 6 bis 8, hindurchgreifen. Die Fingerelemente 58 am Lamellenträger 42 können durch das Herausstanzen von Material erzeugt werden.

Der Stützkörper 36 liegt auf der Getriebeseite G axial am Lamellenträger 42 an. Dazu der Stützkörper 36 und der Lamellenträger 42 derart ausgeführt, dass eine sauber Anlagefläche entsteht.

Durch den Sicherungsring 52 wird der Stützkörper 36 auf der Motorseite M axial gesichert. Über den Sicherungsring 52 werden zudem sowohl die Betätigungskräfte der ersten Kupplung 18 als auch der zweiten Kupplung 24 abgestützt. In Umfangsrichtung ist der Stützkörper 36 über die Fingerelemente 58 des Lamellenträgers 42, welche durch die Ausnehmungen 64 des Stützkörpers 36 hindurchgreifen, gesichert.

Zusätzlich ist eine Sicherungsringnut zur Lagerung des Sicherungsrings 52 auf der radialen Innenseite der Fingerelemente 58 des Lamellenträgers 42 angeordnet. Somit ist der Sicherungsring 52 gegen ein Ablösen unter Drehzahl gesichert.

Der Stützkörper 36 ist vorzugsweise S-förmig ausgeführt, gut erkennbar in Fig. 8. Dabei bildet der zur ersten Kupplung 18 weisende Kragen 48 des Stützkörpers 36 die Abstützung für die erste Kupplung 18, wohingegen die zweite Kupplung 24 am S-Schlag im unteren Bereich des Stützkörpers 36 abgestützt wird.

Aufgrund der geschlossenen Kontur und den beiden Kragen an der Außen- und Innenseite weist der Stützkörper 36 gemäß den Fig. 3 bis 8 eine hohe Steifigkeit auf. Dadurch können die Betätigungskräfte der ersten und der zweiten Kupplung 18, 24 abgestützt werden.

Die Form des Stützkörpers 36 kann durchaus variieren und ist insbesondere von der Lage von Lamellenpakete zueinander und von der Peripherie der beiden Kupplungen 18, 24 abhängig.

Grundsätzlich kann der Stützkörper 36 in sämtlichen Kupplungsanwendungen eingesetzt werden, in denen sich zwei Kupplungen einen Lamellenträger 42 teilen. Bei der beispielhaften, in Fig. 1 dargestellten Dreifachkupplung ist alternativ auch vorteilhaft, dass die zweite Kupplung 24 und die dritte Kupplung 30 auf einem gemeinsamen Lamellenträger angeordnet sind, sodass die erste Kupplung 18 über einen separaten Träger angebunden ist.

Darüber hinaus ist auch der Einsatz in Doppelkupplungsanwendungen und Hybridmodulen vorteilhaft.

Gemäß Fig. 1 ist beispielhaft vorgesehen, dass die Kupplungsanordnung 10 mindestens eine Dämpfereinheit aufweist, die beispielhaft innerhalb des den Nassraum begrenzenden Gehäuses 12 angeordnet ist und mit dem Trägerkörper 14 wechselwirkt, wobei die Dämpfereinheit zur Schwingungsdämpfung mit dem Trägerkörper 14 verbunden ist. Durch die Integration der Dämpfereinheit in das als Nassraum ausgebildete Gehäuse 12 kann insbesondere axialer Bauraum entlang der Drehachse D eingespart werden.

Weiterhin ist gemäß den Fig. 1 und 3 beispielhaft offenbart, dass die Kupplungsanordnung 10 ein Zahnrad aufweist, das radial außen an einem Rotor der Kupplungsanordnung 10 angeordnet ist, wobei das Zahnrad insbesondere ausgebildet ist zur Drehmomentübertragung zwischen einem Elektromotor und der Kupplungsanordnung 10.

Insgesamt ist möglich, dass anstelle eines einzelnen Zahnrades mindestens ein zusätzliches Zwischenrad eingesetzt werden kann. Dadurch können die Umfangsgeschwindigkeiten an den Zahnrädern reduziert werden.

Alternativ kann auch eine Kette anstelle des Zahnrades für die Drehmomentübertragung zwischen dem Elektromotor und der Kupplungsanordnung 10 verwendet werden.

### Bezugszeichenliste

- 10: Kupplungsanordnung
- 12: Gehäuse
- 14: Trägerkörper
- 16: Eingangswelle
- 18: Erste Kupplung
- 20: Erster Erstkupplungsbestandteil
- 22: Zweiter Erstkupplungsbestandteil
- 24: Zweite Kupplung
- 26: Erster Zweitkupplungsbestandteil
- 28: Zweiter Zweitkupplungsbestandteil
- 30: Dritte Kupplung
- 32: Erster Drittkupplungsbestandteil
- 34: Zweiter Drittkupplungsbestandteil
- 36: Stützkörper
- 38: Erster Drucktopf
- 40: Zweiter Drucktopf
- 42: Lamellenträger
- 44: Außenverzahnung des Lamellenträgers
- 46: Innenverzahnung des Lamellenträgers
- 48: Zur ersten Kupplung weisender Kragen des Stützkörpers
- 50: Zur zweiten Kupplung weisender S-Schlag des Stützkörpers
- 52: Sicherungsring
- 54: Haltemittel
- 56: Offenes Ende des Lamellenträgers
- 58: Fingerelemente des Lamellenträgers
- 60: Fingerkranz
- 62: Abstützmittel
- 64: Ausnehmung
- D: Drehachse
- M: Motorseite
- G: Getriebeseite

## Patentansprüche

1. Kupplungsanordnung (10) für einen Antriebsstrang eines Kraftfahrzeuges, wobei die Kupplungsanordnung (10) aufweist:
- ein Gehäuse (12),
- einen zu dem Gehäuse (12) relativ drehbar um eine Drehachse (D) gelagerten Trägerkörper (14), wobei sich die Drehachse (D) von einer Motorseite (M) zu einer Getriebeseite (G) der Kupplungsanordnung (10) erstreckt,
- eine erste Kupplung (18), die über den Trägerkörper (14) einen ersten Erstkupplungsbestandteil (20) zur drehfesten Verbindung mit einer Eingangswelle (16) aufweist und einen mit dem ersten Erstkupplungsbestandteil (20) drehverbindbaren zweiten Erstkupplungsbestandteil (22) aufweist,
- eine zweite Kupplung (24), die zwei miteinander drehverbindbare Zweitkupplungsbestandteile (26, 28) aufweist und mit einem ersten Zweitkupplungsbestandteil (26) drehfest an dem zweiten Erstkupplungsbestandteil (22) der ersten Kupplung (18) angeordnet ist, und die mit einem zweiten Zweitkupplungsbestandteil (28) mit einer ersten Abtriebswelle verbindbar ist,
- wobei an der ersten Kupplung (18) und an der zweiten Kupplung (24) ein gemeinsamer Stützkörper (36) angeordnet ist, der die erste Kupplung (18) und die zweite Kupplung (24) gegen axiale Belastungen entlang der Drehachse (D) widerlagert, wobei die axialen Belastungen der ersten Kupplung (18) von einem getriebeseitigen ersten Drucktopf (38) zur Kupplungswirkverbindung wirken und die axialen Belastungen der zweiten Kupplung (24) von einem getriebeseitigen zweiten Drucktopf (40) zur Kupplungswirkverbindung wirken, **dadurch gekennzeichnet, dass**
- eine dritte Kupplung (30) vorgesehen ist, die zwei miteinander drehverbindbare Drittkupplungsbestandteile (32, 34) aufweist und mit einem ersten Drittkupplungsbestandteil (32) drehfest an dem zweiten Erstkupplungsbestandteil (22) der ersten Kupplung (18) angeordnet ist, und die mit einem zweiten Drittkupplungsbestandteil (34) mit einer zweiten Abtriebswelle verbindbar ist.

2. Kupplungsanordnung (10) für einen Antriebsstrang eines Kraftfahrzeuges nach Anspruch 1, **dadurch gekennzeichnet, dass** der erste Zweitkupplungsbestandteil (26) der zweiten Kupplung (24) und der zweite Erstkupplungsbestandteil (22) der ersten Kupplung (18) als ein gemeinsamer Lamellenträger (42) ausgebildet sind.

3. Kupplungsanordnung (10) für einen Antriebsstrang eines Kraftfahrzeuges nach dem vorhergehenden Anspruch, **dadurch gekennzeichnet, dass** der Lamellenträger (42) eine Außenverzahnung (44) aufweist zur Aufnahme von innenverzahnten Lamellen, insbesondere innenverzahnten Stahllamellen, der ersten Kupplung (18) und dass der Lamellenträger (42) eine Innenverzahnung (46) aufweist zur Aufnahme von außenverzahnten Lamellen, insbesondere außenverzahnten Stahllamellen, der zweiten Kupplung (24).

4. Kupplungsanordnung (10) für einen Antriebsstrang eines Kraftfahrzeuges nach mindestens einem der vorhergehenden Ansprüche, **dadurch gekennzeichnet, dass** der Stützkörper (36) derart S-förmig ausgebildet ist, dass sein äußerer zur ersten Kupplung (18) weisender Kragen (48) die erste Kupplung (18) axial widerlagert und dass der zur zweiten Kupplung (24) weisende S-Schlag (50) des Stützkörpers (36) die zweite Kupplung (24) axial widerlagert.

5. Kupplungsanordnung (10) für einen Antriebsstrang eines Kraftfahrzeuges nach mindestens einem der vorhergehenden Ansprüche, **dadurch gekennzeichnet, dass** die Kupplungsanordnung (10) einen Sicherungsring (52) aufweist, die entlang der Drehachse (D) koaxial auf der Motorseite (M) des Stützkörpers (36) angeordnet ist und den Stützkörper (36) axial widerlagert, wobei der Sicherungsring (52) insbesondere von einem Lamellenträger (42) entlang der Drehachse (D), vorzugsweise durch Haltemittel (54), axial widergelagert ist.

6. Kupplungsanordnung (10) für einen Antriebsstrang eines Kraftfahrzeuges nach mindestens einem der vorhergehenden Ansprüche, **dadurch gekennzeichnet, dass** ein Lamellenträger (42) am zur Motorseite (M) weisenden, offenen Ende (56) Fingerelemente (58) an einem Fingerkranz (60) aufweist, wobei die Fingerelemente (58) durch wechselwirkend ausgebildete Ausnehmungen (64) am Stützkörper (36) hindurchgreifen, wobei die Fingerelemente (58) insbesondere radial ersteckende Haltemittel (54) zur axialen Widerlagerung eines Sicherungsrings (52) am Stützkörper (36) aufweisen.

7. Kupplungsanordnung (10) für einen Antriebsstrang eines Kraftfahrzeuges nach dem vorhergehenden Anspruch, **dadurch gekennzeichnet, dass** der Fingerkranz (60) umfangsgemäß zwischen den Fingerelementen (58) Abstützmittel (62) derart aufweist, dass der Stützkörper (36) und der Lamellenträger (42) axial entlang der Drehachse (D) gegeneinander widerlagernd angeordnet sind.

## Claims

1. A clutch assembly (10) for a drive train of a motor vehicle, wherein the clutch assembly (10) comprises:
- a housing (12),
- a carrier body (14) mounted rotatably about an axis of rotation (D) relative to the housing (12), wherein the axis of rotation (D) extends from an engine side (M) to a transmission side (G) of the clutch assembly (10),
- a first clutch (18), which comprises a first first-clutch component (20) via the carrier body (14) for rotationally fixed connection to an input shaft (16) and a second first-clutch component (22) that is rotatably connectable to the first first-clutch component (20),
- a second clutch (24), which comprises two second-clutch components (26, 28) that are rotatably connectable to one another and which is arranged in a rotationally fixed manner with a first second-clutch component (26) on the second first-clutch component (22) of the first clutch (18), and which can be connected with a second second-clutch component (28) to a first output shaft, and
- wherein a common support body (36) is arranged on the first clutch (18) and on the second clutch (24), which common support body abuts the first clutch (18) and the second clutch (24) against axial loads along the axis of rotation (D), wherein the axial loads of the first clutch (18) act from a transmission-side first pressure pot (38) to the clutch operative connection and the axial loads of the second clutch (24) act from a transmission-side second pressure pot (40) to the clutch operative connection, **characterized in that**
- a third clutch (30) is provided, which comprises two third-clutch components (32, 34) that are rotatably connectable to one another and which is arranged in a rotationally fixed manner with a first third-clutch component (32) on the second first-clutch component (22) of the first clutch (18), and which can be connected with a second third-clutch component (34) to a second output shaft.

2. The clutch assembly (10) for a drive train of a motor vehicle according to claim 1, **characterized in that** the first second-clutch component (26) of the second clutch (24) and the second first-clutch component (22) of the first clutch (18) are designed as a common disk carrier (42).

3. The clutch assembly (10) for a drive train of a motor vehicle according to the preceding claim, **characterized in that** the disk carrier (42) has an external toothing (44) for receiving internally toothed disks, in particular internally toothed steel disks, of the first clutch (18) and that the disk carrier (42) has an internal toothing (46) for receiving externally toothed disks, in particular externally toothed steel disks, of the second clutch (24).

4. The clutch assembly (10) for a drive train of a motor vehicle according to at least one of the preceding claims, **characterized in that** the support body (36) is S-shaped such that its outer collar (48) facing the first clutch (18) axially abuts the first clutch (18) and that the S-shaped curve (50) of the support body (36) facing the second clutch (24) axially abuts the second clutch (24).

5. The clutch assembly (10) for a drive train of a motor vehicle according to at least one of the preceding claims, **characterized in that** the clutch assembly (10) has a locking ring (52), which is arranged coaxially on the engine side (M) of the support body (36) along the axis of rotation (D) and axially abuts the support body (36), wherein the locking ring (52) is axially abutted in particular by a disk carrier (42) along the axis of rotation (D), preferably by holding means (54).

6. The clutch assembly (10) for a drive train of a motor vehicle according to at least one of the preceding claims, **characterized in that** a disk carrier (42) has finger elements (58) on a finger rim (60) at the open end (56) facing the engine side (M), wherein the finger elements (58) reach through interactively formed recesses (64) on the support body (36), wherein the finger elements (58) have in particular radially extending holding means (54) for axially abutting a locking ring (52) on the support body (36).

7. The clutch assembly (10) for a drive train of a motor vehicle according to the preceding claim, **characterized in that** the finger rim (60) has support means (62) circumferentially between the finger elements (58) such that the support body (36) and the disk carrier (42) are arranged abutting one another axially along the axis of rotation (D).

## Revendications

1. Système d'embrayage (10) pour une chaîne cinématique d'un véhicule à moteur, le système d'embrayage (10) comportant :
- un boîtier (12),
- un corps de support (14) monté de manière à pouvoir tourner par rapport au boîtier (12) autour d'un axe de rotation (D), l'axe de rotation (D) s'étendant d'un côté moteur (M) à un côté transmission (G) du système d'embrayage (10),
- un premier embrayage (18), qui comporte un premier élément de premier embrayage (20) pour une liaison solidaire en rotation avec un arbre d'entrée (16) par l'intermédiaire du corps de support (14) et un second élément de premier embrayage (22) pouvant être relié solidaire en rotation avec le premier élément de premier embrayage (20),
- un deuxième embrayage (24) qui comporte deux éléments de deuxième embrayage (26, 28) pouvant être reliés solidaires en rotation l'un avec l'autre et qui est agencé avec un premier élément de deuxième embrayage (26) solidaire en rotation sur le second élément de premier embrayage (22) du premier embrayage (18) et qui peut être relié avec un premier arbre de sortie avec un second élément de deuxième embrayage (28),
- un corps d'appui (36) commun étant agencé sur le premier embrayage (18) et sur le deuxième embrayage (24), qui soutient le premier embrayage (18) et le deuxième embrayage (24) contre des charges axiales le long de l'axe de rotation (D), les charges axiales du premier embrayage (18) agissant à partir d'un premier pot de pression (38) côté transmission jusqu'à la liaison active d'embrayage et les charges axiales du deuxième embrayage (24) agissant depuis un second pot de pression (40) côté transmission vers la liaison active d'embrayage, **caractérisé en ce que**
- un troisième embrayage (30) est prévu, lequel présente deux éléments de troisième embrayage (32, 34) pouvant être reliés solidaires en rotation l'un avec l'autre et qui est agencé sur le second élément de premier embrayage (22) du premier embrayage (18) solidaire en rotation d'un premier élément de troisième embrayage (32) et qui peut être relié avec un second arbre de sortie avec un second élément de troisième embrayage (34).

2. Système d'embrayage (10) pour une chaîne cinématique d'un véhicule à moteur selon la revendication 1, **caractérisé en ce que** le premier élément de deuxième embrayage (26) du deuxième embrayage (24) et le second premier élément d'embrayage (22) du premier embrayage (18) sont conçus comme un support de disques (42) commun.

3. Système d'embrayage (10) pour une chaîne cinématique d'un véhicule à moteur selon la revendication précédente, **caractérisé en ce que** le support de disques (42) présente une denture extérieure (44) pour recevoir des disques à denture intérieure, en particulier des disques en acier à denture intérieure, du premier embrayage (18) et **en ce que** le support de disques (42) présente une denture intérieure (46) pour recevoir des disques à denture extérieure, en particulier des disques en acier à denture extérieure, du deuxième embrayage (24).

4. Système d'embrayage (10) pour une chaîne cinématique d'un véhicule à moteur selon au moins l'une des revendications précédentes, **caractérisé en ce que** le corps d'appui (36) est en forme de S de sorte que sa collerette extérieure (48) tournée vers le premier embrayage (18) contrebalance axialement le premier embrayage (18) et **en ce que** le volet en S (50) du corps d'appui (36) tourné vers le deuxième embrayage (24) contrebalance axialement le deuxième embrayage (24).

5. Système d'embrayage (10) pour une chaîne cinématique d'un véhicule à moteur selon au moins l'une des revendications précédentes, **caractérisé en ce que** le système d'embrayage (10) présente une bague de verrouillage (52) coaxiale le long de l'axe de rotation (D) du côté moteur (M) du corps d'appui (36) et contrebalançant axialement le corps d'appui (36), la bague de verrouillage (52) étant contrebalancée en particulier axialement par un support de disques (42) le long de l'axe de rotation (D), de préférence par des moyens de retenue (54).

6. Système d'embrayage (10) pour une chaîne cinématique d'un véhicule à moteur selon au moins l'une des revendications précédentes, **caractérisé en ce qu'**un support de disques (42) présente, à l'extrémité ouverte (56) orientée vers le côté moteur (M), des éléments en forme de doigt (58) sur une couronne de doigts (60), les éléments en forme de doigt (58) traversant des évidements (64) formés de manière à interagir sur le corps d'appui (36), les éléments en forme de doigt (58) présentant en particulier des moyens de retenue (54) s'étendant radialement pour contrebalancer axialement une bague de verrouillage (52) sur le corps d'appui (36).

7. Système d'embrayage (10) pour une chaîne cinématique d'un véhicule à moteur selon la revendication précédente, **caractérisé en ce que** la couronne de doigts (60) présente des moyens d'appui (62) circonférentiellement entre les éléments en forme de doigt (58) de sorte que le corps d'appui (36) et le support de disques (42) soient agencés axialement en opposition l'un par rapport à l'autre le long de l'axe de rotation (D).
